(19) Europäisches Patentamt
European Patent Office
Office européen des brevets

(11) Numéro de publication: **0 165 100**
**B1**

(12) **FASCICULE DE BREVET EUROPÉEN**

(45) Date de publication du fascicule du brevet: **10.08.88**

(51) Int. Cl.⁴: **C 07 F 5/00**

(21) Numéro de dépôt: **85400829.9**

(22) Date de dépôt: **26.04.85**

(54) **Tri(cyclopentadiényl)cérium et son procédé de préparation.**

(30) Priorité: **27.04.84 US 604756**
**26.11.84 US 674639**

(43) Date de publication de la demande:
**18.12.85 Bulletin 85/51**

(45) Mention de la délivrance du brevet:
**10.08.88 Bulletin 88/32**

(84) Etats contractants désignés:
**CH DE FR GB IT LI NL**

(56) Documents cité:
**JOURNAL OF THE AMERICAN CHEMICAL SOCIETY, vol. 76, 1954, page 6210, Washington, D.C., US; G. WILKINSON et al.: "Cyclopentadienyl compounds of Sc, Y, La, Ce and some lanthanide elements"**
**Décision T 163/84, Journal officiel OEB 7/87, pages 301-308**
**Chemistry of the metal carbon bond, vol. 1 (Patai) 1982, pages 489-532**

(73) Titulaire: **RHONE- POULENC CHIMIE, 25, quai Paul Doumer, F-92408 Courbevoie Cédex (FR)**

(72) Inventeur: **Gradeff, Peter, P.O. Box 278, Pottersville New Jersey 08979 (US)**
Inventeur: **Schreiber, Fred, 100 Lawrence Avenue, Highland Park New Jersey 08904 (US)**

(74) Mandataire: **Dutruc- Rosset, Marie- Claude, RHONE- POULENC INTERSERVICES Service Brevets Chimie 25, Quai Paul Doumer, F-92408 Courbevoie Cédex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



LIBER, STOCKHOLM 1988

**Description**

La présente invention concerne le tri(cyclopentadiényl)cérium et son procédé de préparation.

WILKINSON et BIRMINGHAM [Journal of the American Chemical Society 76, 6210 (1954)] ont montré que le cyclopentadiène forme des composés organométalliques avec un certain nombre de métaux auxquels le noyau cyclopentadiène peut être lié de trois façons:

(a) à de nombreux métaux de transition, par la liaison covalente à deux électrons, dénommée "liaison sandwich";

(b) par une liaison covalente entre le métal et un seul atome de carbone du noyau. Les composés de (cyclopentadiényl)silicium peuvent être de ce type;

(c) par des liaisons ioniques.

En mélangeant sous agitation, le chlorure anhydre du métal avec le (cyclopentadiényl)sodium dans une solution de tétrahydrofuranne, en éliminant le solvant et en chauffant ensuite le résidu à une température comprise entre 200 et 250°C sous vide, il se forme des complexes tricyclopentadiényliques de formule $(C_5H_5)_3M$ dans laquelle M comprend le cérium (III). Le tri(cyclopentadiényl)cérium III est un solide cristallin; il est thermiquement stable jusqu'à une température d'au moins 435°C, température à laquelle il fond; il se décompose avec l'eau pour donner du cyclopentadiène et de l'hydroxyde cérux; il est soluble dans le tétrahydrofuranne et dans le diméthoxyéthane. Le tri(cyclopentadiényl)cérium réagit rapidement avec l'air, il noircit instantanément même lorsqu'il n'est en présence que de traces d'oxygène. Pour plus de détails on se référera à l'article de BIRMINGHAM et WILKINSON publié dans le Journal of the American Chemical Society 78, 42 (1956).

KALSOTRA, ANAND, MULTANI et JAIN ont décrit dans le Journal of Organometallic Chemistry 28, 87 - 89 (1971) la préparation du tétra(cyclopentadiényl)cérium par réaction du (cyclopentadiényl)sodium dans le tétrahydrofuranne avec l'hexachlorure de dipyridinium cérium. La réaction est conduite dans des conditions anhydres. Le (cyclopentadiényl)sodium est ajouté à une solution d'hexachlorure de dipyridinium cérium dans le tétrahydrofuranne, et on manitient le mélange sous reflux entre 100 et 110°C et sous forte agitation pendant 10 à 12 heures jusqu'à ce qu'il se forme un produit brun-rougeâtre. On filtre le mélange refroidi sur verre fritté et on lave le résidu avec du tétrahydrofuranne. Après évaporation du solvant, on obtient une pâte brune épaisse qui est cristallisée dans de l'éther de pétrole léger. On obtient un composé cristallin rouge-orange, dont la couleur rappelle d'une manière frappante celle du tri(cyclopentadiényl)cérium décrit par BIRMINGHAM et WILKINSON en 1956. On se reportera pour plus d'informations relatives à la préparation dudit produit à Israel Journal of Chemistry 9, 569 - 572 (1971).

Dans une série de publications, KALSOTRA et coll. décrivent les dérivés soufrés de tri(cyclopentadiényl)cérium (IV) [Journal of Inorganic Nuclear Chemistry 35, 3966 - 3968 (1973)], les complexes pseudohalogénés de tri(cyclopentadiényl)cérium (IV) [Journal of Inorganic Nuclear Chemistry 34, 2265 - 2269 (1972)], les dérivés alkoxy du cérium (IV) [Journal of Organometallic Chemistry 63, 301 - 303 (1973)], les dérivés phénoliques du tri(cyclopentadiényl)cérium (IV) [Journal of the Chinese Chemical Society 19, 197 - 202 (1972)], les complexes carboxylato de chlorure de tri(cyclopentadiényl)cérium (IV) [Journal of the Chinese Chemical Society 18, 189 - 197 (1971)], les dérivés alkoxy du tri(cyclopentadiényl)cérium (IV) [Journal of the Chinese Chemical Society 20, 171 - 173 (1973)].

Cependant, DEACON, TUONG et VINCE dans POLYHEDRON 2, 969 - 970 (1983) ont réfuté ces auteurs pour ce qui a trait à la synthèse du tétrakis(cyclopentadiényl)cérium (IV). En effet, ils ont montré que la réaction du (cyclopentadiényl)sodium avec l'hexachlorocérate (IV) de dipyridinium dans le tétrahydrofuranne conduit non pas au tétrakis(cyclopentadiényl)cérium (IV) mais au tris(cyclopentadiényl)cérium (III). DEACON et coll., ont mis en évidence que les propriétés d'un dérivé tri(cyclopentadiényl)cérium propoxy obtenu à partir de cette source, diffère on couleur, volatilité, absorption IR du même composé préparé par alcoolyse de tétra(cyclopentadiényl)cérium ou de chlorure de tri(cyclopentadiényl)cérium; ils font remarquer en outre qu'il est difficile de concilier le clivage du tétra(cyclopentadiényl)cérium par l'isopropanol et la stabilité à l'eau et aux acides dilués.

DEACON et coll. ont reproduit la synthèse de KALSOTRA et coll. et ont trouvé que le produit réactionnel était non pas le tétra(cyclopentadiényl)cérium mais le tri(cyclopentadiényl)cérium.

KALSOTRA et coll. et DEACON et coll. ont utilisé pour préparer l'hexachlorocérate (IV) de dipyridinium, la méthode décrite par BRADLEY et coll. dans J. Chem. Soc. 1956, 2260. Cette méthode est fastidieuse mais elle apparaît, selon les auteurs, être la seule qui puisse conduire à un produit de qualité satisfaisante. Dans un premier temps, on transforme le dioxyde de cérium en sulfate cérique d'ammonium. On précipite un hydroxyde cérique pur à partir d'une solution aqueuse de sulfate cérique d'ammonium et on lave le précipité. On traite le précipité fraîchement préparé et mis en suspension dans de l'alcool absolu, avec de l'acide chlorhydrique anhydre et on ajoute de la pyridine qui forme un complexe insoluble d'hexachlorure de dipyridinium cérium $(PyH)_2CeCl_6$. On filtre le complexe et on le sèche. On utilise le complexe pour préparer les alkoxydes selon BRADLEY et coll., et les dérivés de (cyclopentadiényl)cérium selon KALSTORA et coll. et DEACON et coll.

Conformément à la présente invention, on met en oeuvre pour obtenir des complexes cyclopentadiényliques de cérium (III), avec un bon rendement, non pas l'hexachlorocérate de dipyridinium mais le nitrate cérique d'ammonium, produit disponible dans le commerce et relativement bon marché. Au cours du procédé, le cérium (IV) est réduit en cérium (III).

Le procédé, selon l'invention, de préparation du tri(cyclopentadiényl)cérium aussi bien que des

intermédiaires mono- et di(cyclopentadiényl)cérium est caractérisé par le fait qu'il consiste à faire réagir un complexe cyclopentadiénylique de métal alcalin avec un nitrate cérique d'ammonium en solution dans un solvant organique inerte de telle sorte que l'on obtienne le tri(cyclopentadiényl)cérium ou que l'on forme selon l'ordre d'addition des réactifs, successivement et par étape, le dinitrate de mono(cyclopentadiényl)cérium, le mononitrate de di(cyclopentadiényl)cérium et le tri(cyclopentadiényl)cérium.

Lorsque l'on ajoute un complexe cyclopentadiénylique de métal alcalin dans une solution de nitrate cérique d'ammonium, se forme, successivement et par étape, du dinitrate de mono(cyclopentadiényl)cérium, $CeCp(NO_3)_2$, du mononitrate de di(cyclopentadiényl)cérium, $CeCp_2NO_3$ et du tri(cyclopentadiényl)cérium, $CeCp_3$.

La quantité de complexe cyclopentadiénylique de métal alcalin mise en oeuvre est fonction du complexe cyclopentadiénylique de cérium III désiré.

Selon le cas, elle doit être suffisante pour obtenir du dinitrate de mono(cyclopentadiényl)cérium, du mononitrate de di(cyclopentadiényl)céium ou du tricoclopentaiénylcérium.

Lorsque l'on ajoute un complexe cyclopentadiénylique de métal alcalin tel que le(cyclopentadiényl)sodium, NaCp, à une solution de nitrate cérique d'ammonium, il peut se produire plusieurs réactions plus ou moins concurrentes:

| | | |
|---|---|---|
| (a) | $2Ce(NO_3)_4 + 2NaCp$ | $\rightarrow [2Ce(NO_3)_3Cp]$ |
| | $[2Ce(NO_3)_3Cp]$ | $\rightarrow 2Ce(NO_3)_3 + Cp_2$ |
| (b) | $NH_4NO_3 + NaCp$ | $\rightarrow NaNO_3 + NH_3 + CpH$ |
| (c) | $2Ce(NO_3)_4 + 2CpH + 2NH_3$ | $\rightarrow 2Ce(NO_3)_3 + Cp_2 + 2NH_4NO_3$ |
| (d) | $Ce(NO_3)_3 + NaCp$ | $\rightarrow Ce(NO_3)_2Cp + NaNO_3$ |
| (e) | $Ce(NO_3)_2Cp + NaCp$ | $\rightarrow Ce(NO_3)Cp_2 + NaNO_3$ |
| (f) | $Ce(NO_3)Cp_2 + NaCp$ | $\rightarrow Ce(Cp)_3 + NaNO_3$ |

L'équation réactionnelle globale est la suivante:

$$2[Ce(NO_3)_4\,2NH_4NO_3] + 12NaCp \rightarrow 2Ce(Cp)_3 + 4CpH + (Cp)_2 + 12NaNO_3 + 4NH_3$$

Ces réactions permettent de se faire une idée du mécanisme éventuel qui peut suivre ou non ce modèle.

Par exemple, la réaction (b) ne semble pas très rapide: on peut observer le dégagement d'ammoniac longtemps après la fin de toutes les réactions. Il apparaît que la réaction (a) est la plus rapide. En effet, il est évident que cette réaction doit être terminée avant que toute autre n'ait lieu.

Lorsque l'on inverse l'ordre d'addition et que l'on ajoute la solution de nitrate cérique d'ammonium dans un solvant organique inerte à une bouillie de complexe cyclopentadiénylique de métal alcalin dans un solvant organique inerte, bien que les réactions soient complexes, on obtient directement le produit final $Ce(Cp)_3$, sans passer par des étapes intermédiaires.

On conduit, de préférence, le procédé en ajoutant une solution de nitrate cérique d'ammonium dans un solvant organique inerte à une bouillie de complexe cyclopentadiénylique de métal alcalin dans le même solvant.

On peut utiliser n'importe quel complexe cyclopentadiénylique de métal alcalin tels que le (cyclopentadiényl)sodium, le (cyclopentadiényl)potassium, le (cyclopentadiényl)césium, le (cyclopentadiényl)lithium. On choisit préférentiellement le (cyclopentadiényl)sodium. La mise en oeuvre d'un excés de NaCp par rapport à la quantité théorique entraîne la formation de complexes pourpre-foncé qui sont sans intérêt. On peut récupérer le produit recherché $Ce(Cp)_3$ en ajoutant au complexe, la quantité nécessaire de nitrate cérique d'ammonium.

Lorsque le produit final souhaité est $Ce(Cp)_3$, il est plus facile d'ajouter la solution de nitrate cérique d'ammonium à la bouillie de NaCp que l'inverse. Tant que le complexe NaCp est en exces, pendant la plus grande partie de la durée réactionnelle.

On peut conduire la réaction dans tout solvant organique inerte approprié du nitrate cérique d'ammonium. Le complexe cyclopentadiénylique de métal alcalin peut être en solution ou suspension dans le même solvant. Le tétrahydrofuranne et le diméthoxyéthane sont aisément accessibles et sont choisis de préférence. On peut utiliser d'autres solvants tels que le benzène, l'hexane, l'acétonitrile et d'autres éthers glycoliques.

On utilise, de préférence, un solvant organique inerte en quantité suffisante pour dissoudre le nitrate cérique d'ammonium et le (cyclopentadiényl)cérium formé.

On effectue la réaction à température ambiante. On peut mettre en oeuvre des températures plus basses allant d'environ - 10 à environ + 25°C, mais alors la réaction sera généralement lente. La réaction a lieu également à des températures élevées pouvant atteindre jusqu'à environ 250°C, mais il est plus aisé de travailler à la température de reflux du solvant. La réaction est rapide et est généralement terminée en moins d'une heure et peut durer jusqu'à 10 heures environ.

Le milieu réactionnel contient le nitrate correspondant au métal alcalin tel que, par exemple, le nitrate de sodium. Le sel est insoluble dans le milieu réactionnel et précipite. On peut séparer le nitrate par filtration, récupérer le filtrat, évaporer le solvant, laver et sécher le résidu solide pour récoupérer le mono-, di- ou tri(cyclopentadiényl)cérium selon le stade de la réaction.

Pour certaines applications, on peut utiliser le mono-, le di- ou le tri(cyclopentadiényl)cérium sous la forme sous laquelle ils existent dans le milieu réactionnel, à la fin de la réaction, c'est-à-dire sans les isoler du milieu réactionnel ou les séparer des sous-produits ce qui évite des coûts de traitement et de manipulation.

Les exemples qui suivent, illustrent un mode de réalisation préférentielle de l'invention mais en aucun cas, ils ne limitent la portée de l'invention.

**Exemple 1**

On prépare le (cyclopentadiényl)sodium en ajoutant, par fractions de 5 $cm^3$, une solution de cyclopentadiène (12,56 g à environ 95%, 0,1805 mole) dans du diméthoxyéthane (27,1 g) à -78°C, à une bouillie d'hydrure de sodium (7,45 g, 0,1820 mole, dispersion dans l'huile à 58,62 %) dans du diméthoxyéthane (98,2 g) sous argon, à -2°C. La température du milieu réactionnel est maintenue entre -10 et -20°C par un bain réfrigérant. Le dégagement d'hydrogène est très important. Lorsque l'addition est terminée, on laisse la bouillie rose-gris de (cyclopentadiényl)sodium se réchauffer jusqu'à la température ambiante.

A une solution de nitrate cérique d'ammonium (0,0301 mole, 16,70 g) dans 136,9 g de diméthoxyéthane sous argon, on ajoute lentement une bouillie de (cyclopentadiényl)sodium (0,18 mole) dans 125 g de diméthoxyéthane. La réaction est effectuée à température ambiante. Il se produit une réaction légèrement exothermique qui ne nécessite pas de refroidissement. Le milieu réactionnel final est une bouillie d'un brun-doré foncé. Le mélange est maintenu sous agitation pendant toute une nuit.

Le lendemain, on filtre le précipité, on le lave avec du diméthoxyéthane jusquà ce qu'il n'y ait plus aucun entraînement de couleur et on le sèche, ensuite, sous vide. On obtient alors 16,0 g de solide havane, presque entièrement soluble dans l'eau, présentant des traces de cérium et ayant un pH de l'ordre de 6,5, ce qui indique qu'il s'agit du nitrate de sodium attendu (15,3 g selon la théorie), tout le cérium se trouvant dans la couche organique.

Le filtrat est une solution brun-doré de tri(cyclopentadiényl)cérium dans le diméthoxyéthane.

On récupère le tri(cyclopentadiényl)cérium après avoir évaporé le solvant.

**Exemple 2**

On met en suspension 0,061 mole de (cyclopentadiényl)sodium dans 150 $cm^3$ de diméthoxyéthane. A la température ambiante, on introduit ladite suspension en 15 minutes dans une solution de 0,03 mole de nitrate cérique d'ammonium dans 150 $cm^3$ de diméthoxyéthane. La réaction est rapide et le solide $NaNO_3$ qui précipite, est filtré après 15 minutes.

Le filtrat contient le complexe $Ce(NO_3)_2Cp$. On évapore le diméthoxyéthane sur une fraction de la solution et l'on récupère le solide.

Sur le reste de la solution, on ajoute 2 équivalents-mole de NaAc par équivalent-mole de $Ce(NO_3)_2Cp$. La réaction est rapide conduisant à 2 moles de $NaNO_3$ et 1 mole de $Ce(Ac)_2Cp$. Après filtration, on obtient un mélange solide. On sépare $Ce(Ac)_2Cp$ du $NaNO_3$ par traitement au méthanol.

**Exemple 3**

On met en suspension 0,061 mole de (cyclopentaidényl)sodium dans 150 $cm^3$ de diméthoxyéthane. A la température ambiante, on introduit ladite suspension en 15 minutes dans une solution de 0,03 mole de nitrate cérique d'ammonium dans 150 $cm^3$ de diméthoxyéthane. La réaction est rapide et le solide $NaNO_3$ qui précipite, est filtré après 15 minutes.

Le filtrat contient le complexe $Ce(NO_3)_2Cp$. On évapore le diméthoxyéthane sur une fraction de la solution et l'on récupère le solide.

Sur le reste de la solution, on ajoute 2 équivalents-mole d'octoate de sodium par équivalent-mole de $Ce(NO_3)_2$ Cp. La réaction est rapide conduisant à 2 moles de $NaNO_3$ et 1 mole de $Ce(oct)_2Cp$. On sépare $NaNO_3$ par filtration. On isole $Ce(oct)_2Cp$ par évaparation du solvant.

**Exemple 4**

On met en suspension 0,091 mole de (cyclopentadiényl)sodium dans 150$cm^3$ de diméthoxyéthane. A la température ambiant, on introduit ladite suspension en 15 minutes dans une solution de 0,03 mole de nitrate cérique d'ammonium dans 150 $cm^3$ de diméthoxyéthane. La réaction est rapide et le solide $NaNO_3$ qui précipte, est filtré après 15 minutes.

Le filtrat contient le complexe $CeNO_3(Cp)_2$. On évapore le diméthoxyéthane sur une fraction de la solution et l'on récupère le solide.

Sur le reste de la solution, on ajoute 1 équivalent-mole de NaAc par équivalent-mole de $CeNO_3(Cp)_2$. Après

filtration, on obitent un mélange solide. On sépare $CeAc(Cp)_2$ par traitement au méthanol.

**Exemple 5**

On met en suspention 0,061 mole de (cyclopentatiényl)sodium dans 150 $cm^3$ de diméthoxyéthane. A la température ambiante, on introduit ladite suspension en 15 minutes dans une solution de 0,03 mole de nitrate cérique d'ammonium dans 150 $cm^3$ de diméthoxyéthane. La réaction est rapide et le solide $NaNO_3$ qui précipite, est filtré après 15 minutes.

Le filtrat contient le complexe $Ce(NO_3)_2Cp$. On évapore le diméthoxyéthane sur une fraction de la solution et l'on récupère le solide.

Sur le reste de la solution, on ajoute 2 équivalnts-mole de

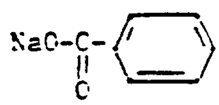

par équivalent-mole de $Ce(NO_3)Cp$. La réaction est rapide conduisant à 2 moles de $NaNO_3$ et 1 mole de

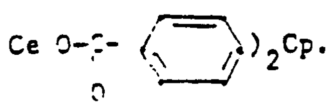

Après filtration, on obtient un mélange solide. On sépare

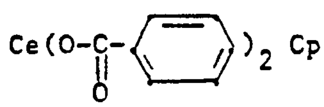

par traitement au méthanol.

**Exemple 6**

On ajoute lentement une solution de 0,03 mole de nitrate cérique d'ammonium dans 100 g de diméthoxyéthane à une suspension de 0,1505 mole de NaCp dans du tétrahydrofuranne. Le milieu réactoinnel présente une coloration pourpre intense qui devient brun-doré foncé à la fin de l'addition du nitrate cérique d'ammonium. Après mise au reflux toute une nuit, le dégagement d'ammoniac fléchit. On filtre le $NaNO_3$ obtenu et l'on récupère $Ce(Cp)_3$ à partir de la solution.

**Revendications**

1. Procédé de préparation de tri(cyclopentadiényl)cérium caractérisé par le fait qu'il consiste à faire réagir un complexe cyclopentadiénylique de métal alcalin avec un nitrate cérique d'ammonium en solution dans un solvant organique inerte jusqu'à formation de tri(cyclopentadiényl)cérium.

2. Procédé selon la revendication 1 caractérisé par le fait que la solution de nitrate cérique d'ammonium est ajoutée au complexe cyclopentadiénylique de métal alcalin.

3. Procédé selon la revendication 2 caractérisé par le fait que le complexe cyclopentadiénylique de métal alcalin est sous la forme d'une bouillie dans le même solvant organique.

4. Procédé selon la revendication 1 caractérisé par le fait que la température est comprise entre environ -10°C et environ 250°C.

5. Procédé selon la revendication 1 caractérisé par le fait que la réaction est conduite à la température de reflux du solvant organique inerte.

6. Procédé selon la revendication 1, caractérisé par le fait que le complexe cyclopentadiénylique de métal alcalin est le (cyclopentadiényl)sodium.

7. Procédé selon la revendication 1 caractérisé par le fait que le nitrate de métal alcalin formé au cours de la réaction est séparé par filtration et que le (cyclopentadiényl)cérium est récupéré à partir du filtrat.

8. Procédé de préparation du tri(cyclopentadiényl)cérium aussi bien que des intermédiaires mono- et

di(cyclopentadiényl)cérium caractérisé par le fait qu'il consiste à ajouter un complexe cyclopentadiénylique de métal alcalin à une solution de nitrate cérique d'ammonium, formant successivement et par étape, le dinitrate de mono(cyclopentadiényl)cérium, le mononitrate de di(cyclopentadiényl)cérium et le tri(cyclopentadiényl)cérium.

9. Procédé selon la revendication 8 caractérisé par le fait qu'il est conduit en présence d'une quantité suffisante de complexe cyclopentadiénylique de métal alcalin pour former du dinitrate de mono(cyclopentadiényl)cérium.

10. Procédé selon la revendication 8 caractérisé par le fait il est conduit en présence d'une quantité suffisante de complexe cyclopentadiénylique de métal alcalin pour former du mononitrate de (cyclopentadiényl)cérium.

11. Procédé selon la revendication 8 caractérisé par le fait qu'il est conduit en présence d'une quantité suffisante de complexe clopentadiénylique de métal alcalin pour former du tri(cyclopentaényl)cérium.

12. Procédé selon la revendication 8 caractérisé par le fait que le complexe cyclopentadiénylique de métal alcalin est ajouté à solution de nitrate cérique d'ammonium.

13. Procédé selon la revendication 8 caractérisé par le fait que le complexe cyclopentadiénylique de métal alcalin est sous la forme d'une bouillie dans le même solvant organique.

14. Procédé selon la revendicatlon 8 caractérisé par le fait que la température est comprise entre environ -10° C et environ 250° C.

15. Procédé selon la revendication 8 caractérisé par le fait qu'il est conduit en présence d'une quantité suffisante de solvant organique inerte pour dissoudre le nitrate cérique d'ammonium et le (cyclopentadiényl)cérium formé.

16. Dinitrate de mono(cyclopentadiényl)cérium.

17. Mononitrate de di(cyclopentadiényl)cérium.

**Patentansprüche**

1. Verfahren zur Herstellung von Tri(cyclopentadienyl)-Cer, dadurch gekennzeichnet, daß man einen Alkalimetall-Cyclopentadienyl-Komplex mit einem Cer-Ammonium-Nitrat in einem inerten organischen Lösungsmittel bis zur Bildung des Tri(cyclopentadienyl)-Cers reagieren läßt.

2. Verfahren nach Anspruch 1, dadurch gekennzeichnet, daß die Cer-Ammonium-Nitrat-Lösung zu dem Alkalimetall-Cyclopentadienyl-Komplex gegeben wird.

3. Verfahren nach Anspruch 2, dadurch gekennzeichnet, daß der Alkalimetall-Cyclopentadienyl-Komplex in Form einer Aufschlämmung im gleichen organischen Lösungsmittel vorliegt.

4. Verfahren nach Anspruch 1, dadurch gekennzeichnet, daß die Temperatur zwischen ungefähr -10° C und ungefähr 250° C gehalten wird.

5. Verfahren nach Anspruch 1, dadurch gekennzeichnet, daß die Reaktion bei der Rückflußtemperatur des inerten organischen Lösungsmittels durchgeführt wird.

6. Verfahren nach Anspruch 1, dadurch gekennzeichnet, daß der Alkalimetall-Cyclopentadienyl-Komplex (Cyclopentadienyl)-Natrium ist.

7. Verfahren nach Anspruch 1, dadurch gekennzeichnet, daß das bei der Reaktion gebildete Alkalinitrat durch Filtration abgetrennt und das (Cyclopentadienyl)-Cer aus dem Filtrat gewonnen wird.

8. Verfahren zur Herstellung von Tri(cyclopentadienyl)-Cer sowie der Zwischenprodukte Mono- und Di(cyclopentadienyl)-Cer, dadurch gekennzeichnet, daß es in der Zugabe eines Alkalimetall-Cyclopentadienyl-Komplexes zu einer Cer-Ammonium-Nitratlösung besteht, wobei nacheinander stufenweise das Dinitrat des Mono(cyclopentadienyl)-Cer, das Mononitrat des Di(cyclopentadienyl)-Cer und das Tri(cyclopentadienyl)-Cer gebildet werden.

9. Verfahren nach Anspruch 8, dadurch gekennzeichnet, daß es in Gegenwart einer ausreichenden Menge des Alkalimetall-Cyclopentadienyl-Komplexes durchgeführt wird, um das Dinitrat des Mono(cyclopentadienyl)-Cer zu bilden.

10. Verfahren nach Anspruch 8, dadurch gekennzeichnet, daß es in Gegenwart einer ausreichenden Menge des Alkalimetall-Cyclopentadienyl-Komplexes durchgeführt wird, um das Mononitrat des Di(cyclopentadienyl)-Cer zu bilden.

11. Verfahren nach Anspruch 8, dadurch gekennzeichnet, daß es in Gegenwart einer ausreichenden Menge des Alkalimetall-Cyclopentadienyl-Komplexes durchgeführt wird, um Tri(cyclopentadienyl)-Cer zu bilden.

12. Verfahren nach Anspruch 8, dadurch gekennzeichnet, daß der Alkalimetall-Cyclopentadienyl-Komplex zu der Cer-Ammonium-Nitrat-Lösung gegeben wird.

13. Verfahren nach Anspruch 8, dadurch gekennzeichnet, daß der Alkalimetall-Cyclopentadienyl-Komplex in Form einer Aufschlämmung im gleichen organischen Lösungsmittel vorliegt.

14. Verfahren nach Anspruch 8, dadurch gekennzeichnet, daß die Temperatur zwischen ungefähr -10° C und ungefähr 250° C liegt.

15. Verfahren nach Anspruch 8, dadurch gekennzeichnet, daß es in Gegenwart einer ausreichenden Menge des inerten organischen Lösungsmittels durchgeführt wird, um das Cer-Ammonium-Nitrat und das gebildete (Cyclopentadienyl)-Cer zu lösen.

16. Mono(cyclopentadienyl)-Cer-Dinitrat.
17. Di(cyclopentadienyl)-Cer-Mononitrat.

**Claims**

1. Process for the preparation of tri(cyclopentadienyl)cerium, characterized in that it consists in reacting a cyclopentadienyl complex of alkali metal with a ceric ammonium nitrate in solution in an inert organic solvent until tri(cyclopentadienyl)cerium is formed.
2. Process according to claim 1, characterized in that the solution of ceric ammonium nitrate is added to the cyclopentadienyl complex of alkali metal.
3. Process according to claim 2, characterized in that the cyclopentadienyl complex of alkali metal is in the form of a slurry in the same organic solvent.
4. Process according to claim 1, characterized in that the temperature is between approximately -10° C and approximately 250° C.
5. Process according to claim 1, characterized in that the reaction is carried out at the reflux temperature of the inert organic solvent.
6. Process according to claim 1, characterized in that the cyclopentadienyl complex of alkali metal is (cyclopentadienyl)sodium.
7. Process according to claim 1, characterized in that the alkali metal nitrate formed during the reaction is separated off by filtration and that the (cyclopentadienyl)cerium is recovered from the filtrate.
8. Process for the preparation of tri(cyclopentadienyl)cerium and of the mono- and di(cyclopentadienyl)cerium intermediates, characterized in that it consists in adding a cyclopentadienyl complex of alkali metal to a solution of ceric ammonium nitrate, forming successively and in stages, mono(cyclopentadienyl)cerium dinitrate, di(cyclopentadienyl)cerium mononitrate and tri(cyclopentadienyl)cerium.
9. Process according to claim 8, characterized in that it is carried out in the presence of a sufficient quantity of cyclopentadienyl complex of alkali metal to form mono(cyclopentadienyl)cerium dinitrate.
10. Process according to claim 8, characterized in that it is carried out in the presence of a sufficient quantity of cyclopentadienyl complex of alkali metal to form di(cyclopentadienyl)cerium mononitrate.
11. Process according to claim 8, characterized in that it is carried out in the presence of a sufficient quantity of cyclopentadienyl complex of alkali metal to form tri(cyclopentadienyl)cerium.
12. Process according to claim 8, characterized in that the cyclopentadienyl complex of alkali metal is added to the solution of ceric ammonium nitrate.
13. Process according to claim 8, characterized in that the cyclopentadienyl complex of alkali metal is in the form of a slurry in the same organic solvent.
14. Process according to claim 8, characterized in that the temperature is between approximately -10° C and approximately 250° C.
15. Process according to claim 8, characterized in that it is carried out in the presence of a sufficient quantity of inert organic solvent to dissolve the ceric ammonium nitrate and the (cyclopentadienyl)cerium formed.
16. Mono(cyclopentadienyl)cerium dinitrate.
17. Di(cyclopentadienyl)cerium mononitrate.